# EUROPEAN PATENT APPLICATION

(11) **EP 2 287 726 A2**
(43) Date of publication of application: **23.02.2011**
(21) Application number: 10172582.8
(22) Date of filing: 12.08.2010
(51) Int. Cl.: G06F 9/44, G06Q 10/00

(54) **Sequenced applications with user playback or other user controls utilizing a single window or dialog box**

(30) Priority: 21.08.2009 US 235838 P; 15.07.2010 US 837150
(71) Applicant: Avaya Inc., New Jersey, DE 07920-2332 (US)
(72) Inventor: Mohler David, Arvada, CO 80005 (US)
(74) Representative: Williams, David John

(57) **Abstract**

Methods and systems for displaying content in support of a communications session are provided. More specifically, a single window session application is provided in which content is displayed in a single window user interface. Changes or modifications to the content displayed are presented to conference participants in the single window user interface presented by each participant's communication device. Different items of content can be displayed in sequence, but are not displayed simultaneously. In addition, input from different users can be accepted, to support collaboration.

## Description

### CROSS-REFERENCE TO RELATED APPLICATIONS

This application claims the benefit of U.S. Provisional Patent Application Serial No. 61/235,838, filed August 21, 2009, the entire of disclosure of which is hereby incorporated herein by reference.

### FIELD

The present invention is generally directed to communications systems, and to the provision of an application for presenting content to multiple communication device users utilizing a single window or dialog box.

### BACKGROUND

Communications devices and systems are commonly used to support communications between two or more parties at different locations from one another. For example, conference calls between users at multiple locations are common. In order to facilitate the exchange of information during conference calls, video conferencing capabilities have been developed. Video conferencing capabilities can include electronic whiteboards or other applications and systems to display or otherwise exchange information between conference participants. Such systems have typically been implemented using specialized video conferencing equipment.

Mobile communication devices are increasingly relied on by users as a primary means of communication. Most mobile devices have a relatively compact format. In particular, the display capabilities of mobile devices may be relatively limited. As a result, it can be difficult or impossible for a user of a mobile device to fully participate in video or other conferences in which information is exchanged using visual displays. For example, where multiple applications are used to exchange information in association with a conference session, those applications have each occupied a different window. The resulting multiplicity of windows can be difficult to manage on many communication endpoints, and in particular on communication endpoints having limited display capabilities. The limitations of communication device displays are especially apparent where the communication device relies on a touch screen interface for receiving input from the user of the device. In particular, in connection with such devices, display area available for presenting content that is the subject of a communications session or conference is especially limited.

### SUMMARY

Embodiments of the present invention are directed to solving these and other problems and disadvantages of the prior art. According to embodiments of the present invention, a communications session between two or more parties is supported by a single window or dialog box. More particularly, embodiments of the present invention provide a single window user interface for presenting content, including different items of content associated with different applications, to the participants of a communications session.

In accordance with embodiments of the present invention, a single window session application presents content to communications session participants using a single window. Moreover, the single window session application can allow one or more users of communication devices included in the communications session to change or manipulate displayed content. Accordingly, the single window session application can support collaboration between users. In addition, embodiments of the present invention provide a single window session application in which content formatted according to different applications can be presented. For example, where content formatted according to a first application is displayed in the single window user interface, and user input selecting second content formatted according to a second application is received, the first content is replaced by the second content in the single window user interface of the single window session application.

A communications system in accordance with embodiments of the present invention includes communication devices capable of supporting real time communications over a communication network. In addition, the communication devices include a display capable of presenting content to a user. Moreover, one or more of the communication devices executes or has access to a single window session application through which content is presented to the user of the communication device in connection with a communications session. The communication devices may also receive input from an associated user that can be used to control the content presented by the single window user interface. More particularly, the single window session application is capable of presenting content to communications session participants in sequence through a single window displayed by each participant's communication device in response to user input or pre-arranged scripts.

Additional features and advantages of embodiments of the present invention will become more readily apparent from the following description, particularly when taken together with the accompanying drawings.

### BRIEF DESCRIPTION OF THE DRAWINGS

**Fig. 1** depicts a communications system in accordance with at least some embodiments of the present invention;
**Fig. 2** is a block diagram depicting components of a communications device in accordance with embodiments of the present invention;
**Fig. 3** depicts an exemplary communications device display in accordance with embodiments of the present invention; and
**Fig. 4** is a flowchart illustrating aspects of the operation of a communications system incorporating a single window session application in accordance with embodiments of the present invention.

### DETAILED DESCRIPTION

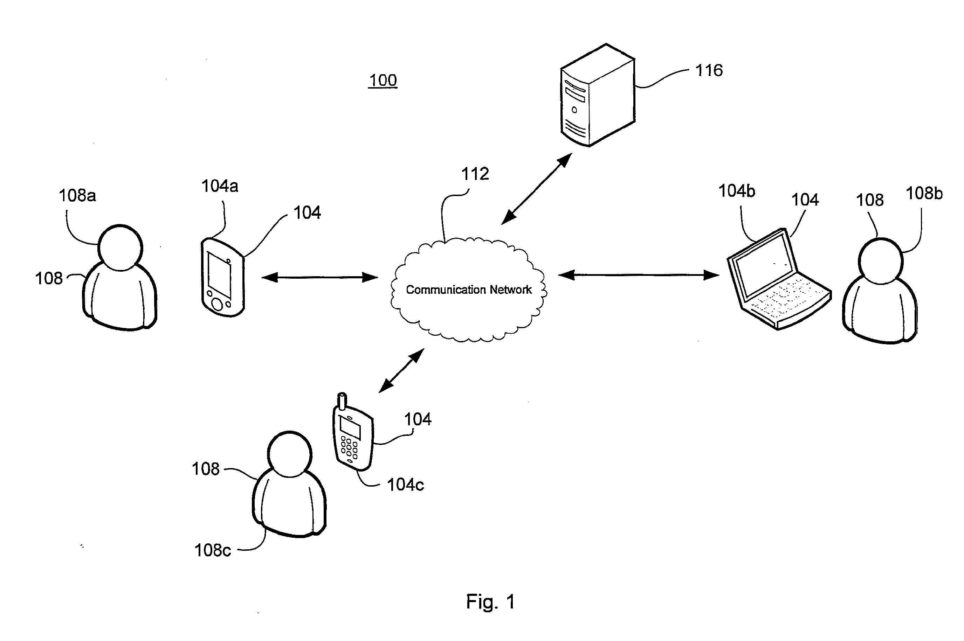

With reference to **Fig. 1****,** an exemplary communications system 100 will be described in accordance with at least some embodiments of the present invention. In general, the communications system comprises a plurality of communication devices 104, each associated with one or more users 108. In the example of **Fig. 1****,** a first communication device 104a associated with a first user 108a comprises a smart phone type device. A second communication device 104b associated with a second user 108b comprises a laptop computer. A third communication device 104c associated with a third user 108c comprises a cellular telephone. Although particular examples of communication devices 104 have been presented, it should be appreciated that a communication device 104 in accordance with embodiments of the present invention is not limited to such examples. In particular, a communication device 104 can be any device capable of supporting communications established in connection with a communication network 112. Moreover, at least one of the communication devices 104 included in a communications system 100 in accordance with embodiments of the present invention includes the capability of displaying a single window or dialog box operated in accordance with a single window session application, as described herein.

The communication network 112 interconnecting the communication devices 104 may comprise any type and any number of communication mediums capable of supporting communications sessions, such as voice calls, video calls, chats, emails, TTY calls, multimedia sessions, or the like. The communication network 112 may include a LAN, a WAN, a SIP network, and any other type of packet switch or circuit switched network known in the art. In addition, it can be appreciated that the communication network 112 need not be limited to any one network type, and instead may be comprised of a number of different networks and/or network types. The communication network 112 may include an IP multimedia subsystem (IMS) network, an architectural SIP standard well known in the art, or any other type of network that provides access to one or more of the Internet, a standard plain old telephone system (POTS), an integrated services digital network (ISDN), the public switched telephony network (PSTN), and/or any type of known cellular or other wireless communication network. Moreover, the communication network 112 may comprise the Internet. Accordingly, the communication network 112 is equipped to facilitate and support communications between communication devices 104 via one or more communication media and/or modalities.

Also included in the communications system 100 illustrated in Fig. 1 is a server computer 116. Although not required, the inclusion of a server computer 116 can allow some or all functions performed in support of a communications session between communication devices 104 to be performed by or in connection with the server computer 116. For example, execution of a single window session application as described herein can be performed by one or more server computers 116, in support of one or more communication devices 104. Alternatively or in addition, a server computer 116 can function as a repository or store of data comprising content displayed through a single window session application as described herein.

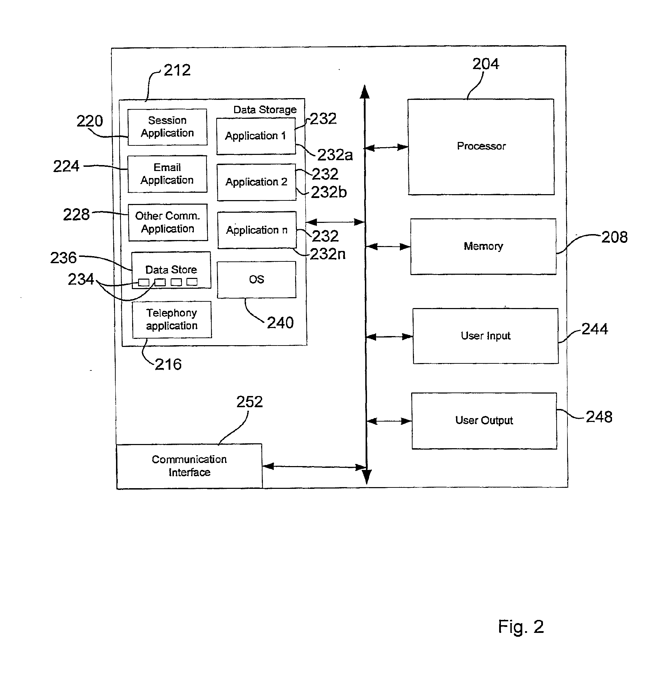

With reference now to **Fig. 2****,** aspects of a communication device 104 included in a communications system 100 in accordance with embodiments of the present invention, are illustrated. In general, each communication device 104 includes a processor 204 capable of executing program instructions or software. Accordingly, the processor 204 may include any general purpose programmable processor or controller for executing application programming or instructions. As a further example, the processor 204 may comprise a specially configured application specific integrated circuit (ASIC). The processor 204 generally functions to run programming code or instructions implementing various of the functions performed by the communication device 104. As will be described in greater detail elsewhere herein, such functions may include support of communications sessions and sharing of content in a single window of a display through or in connection with the execution of a single window session application as described herein.

A communication device 104 may additionally include memory 208 for use in connection with the execution of programming by the processor 204, and for temporary or long term storage of program instructions and/or data. As examples, the memory 208 may comprise RAM, SDRAM, or other solid state memory. Alternatively or in addition, data storage 212 may be provided. In accordance with embodiments of the present invention, data storage 212 can contain program instructions or code implementing various of the applications executed by the communication device 104, and data that is used and/or generated in connection with the execution of applications. Like the memory 208, the data storage 212 may comprise a solid state memory device. Alternatively or in addition, the data storage 212 may comprise a hard disk drive or other random access memory. In accordance with still other embodiments, the memory 208 may provide random access storage, while some or all of the data storage 212 may comprise read only storage.

Examples of application programming or instructions that can be stored in data storage 212 include a telephony application 216. In addition, in accordance with embodiments of the present invention, a communication device 104 can include a single window session application 220. A communication device 104 may also include an email application 224, or other communication application 228. In accordance with still other embodiments, the data storage 212 of a communication device 104 may store a number of other applications 232a-n. Examples of such other applications 232 include word processing, spreadsheet, presentation, drawing, multimedia presentation, calendar, or other applications. Moreover, an application 232 can comprise a stand-alone application, or the client portion of a client-server application that cooperates with the server 116 as the server host. At least some of the applications 232 are operable to display content 234. Moreover, the memory 208 and/or data storage 212 may provide a data store 236 for example for storing content 234 displayed and/or used by an application 252, and storage for operating system software 240.

A communication device 104 also generally includes one or more user input devices 244. Examples of user input devices include a touch screen display, a keyboard, a pointing device combined with a display screen or other position encoder, a microphone or other audible input device, and a keypad. In addition, a communication device 104 generally includes one or more user output devices 248. Examples of user output devices 248 include a display, an audio output device, and indicator lamps. A communication device 104 also generally includes one or more communication network interfaces 252. Examples of communication network interfaces 252 that may be provided as part of a communication device 104 include a packet data network interface, such as a wired or wireless Ethernet interface or cellular packet data interface, a telephony network interface, and/or other wireless or wire line interfaces.

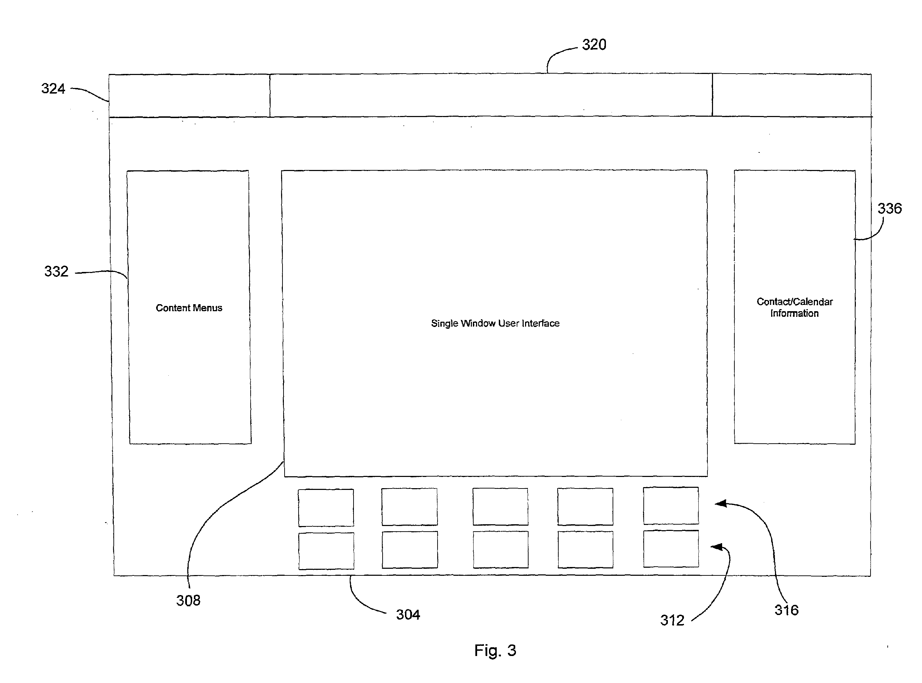

**Fig. 3** depicts a graphical user interface 304 displayed to a user 108 of a communication device 104. More particularly, the example graphical user interface 304 is displayed by a user output 248 comprising a visual display of the communication device 104. In addition, the graphical user interface 304 presents one or more elements to the user 108 that are generated through or in cooperation with the execution of a single window session application 220. More particularly, the graphical user interface 304 includes a session window 308 comprising a single window user interface generated by or in association with execution of the single window session application 220 running on or accessed by the communication device 104. More particularly, the single window user interface 308 can present content or portions of content 234 that is the subject of or related to a communications session between two or more communication devices 104. Moreover, the single window user interface 308 can present the same information on the displays of each communication device 104 participating in the communications session. The content presented by the single window user interface 308 can be manipulated in response to input provided by one or more of the users 108. Moreover, any such manipulation can be displayed in real time or near real time. Accordingly, the single window user interface 308 can comprise a collaborative tool, or support collaboration between users 108 of different communication devices 104. In accordance with embodiments of the present invention, different application content 234 can be selected and displayed in the single window user interface 308. For example, where input from a user 108 comprising a selection of second content 234 formatted for execution and/or display in connection with a second application 232 is received while first content 234 formatted for display in association with a first application 232 is displayed in the single window user interface 308, the display of the first content 234 in the single window user interface 308 is replaced by a display of the second content 234 in the single window user interface 308. Accordingly, the selection of new or additional content 234 does not result in the display and/or creation of additional windows. Instead, multiple pieces of content 234 are displayed in series in the single window user interface 308. In addition, a user 208 can enter input that is applied to content 234 displayed in the single window user interface 308 by the single window session application 220 even though the content 234 is stored on another communication device 104 or on a server 116.

In addition, content icons or items 312 representing information regarding available content 234 can be displayed. For instance, where first content 234 is replaced by second content 234 in the single window user interface 308, the first content 234 can be represented by a content icon 312. As another example, some or all of the items of content 234 available for display in the single window user interface 308 can be represented by a corresponding content icon 312. Input from a user 108 comprising a selection of the content icon 312 corresponding to the first content 234 causes the second content 234 (or other content 234 then displayed) in the single window user interface 308 to be replaced by the first content 234. In this way, users 108 can toggle between the content 234 displayed by the single window user interface 308. Moreover, this ability can be provided even though different items of content 234 require the invocation of different applications 232 for such display and/or execution. In accordance with further embodiments, the particular application 232 invoked for display of content 234 by the single window user interface 308 determines the behavior of the single window user interface 308 in response to the receipt of input or other commands from a user 108. For instance, while a first key combination provided as input while a first application 232 is active in the single window user interface 308 may invoke a first action, that same key combination may be effective to invoke a second action when a second application 232 is active in connection with the content 234 displayed by the single window user interface 308.

The graphical user interface 304 may additionally include information regarding conference participants 316. Examples of information regarding conference participants 316 that may be provided include the identities of users 108 participating in a communications session, presence information regarding the users 108, whether those users 108 have permission to change or manipulate content 234 displayed within the single window user interface 308, the identity of the user 108 speaking at a particular point in time, the identity of the user 108 manipulating or selecting content 234 at a particular point in time, or other information. In accordance with further embodiments, the information regarding conference participants 316 may provide a control mechanism by which one of the conference participants, for example an administrator or lead participant, can enter input to control the user or users 108 that are permitted to select or manipulate content 234 displayed within the single window user interface 308 at a particular moment in time. In accordance with still other embodiments, information regarding conference participants 316 may provide an interface through which a user 108 can request permission to speak, manipulate or select content 234 displayed through the single window user interface 308, or otherwise contribute to the communications session. In accordance with still other embodiments, a user 108 may be required to select an icon included in the information regarding conference participants 316 corresponding to that user 108, as a prelude to speaking, manipulating or selecting content 234 displayed in the single window user interface 308, or otherwise contributing to the communications session.

Examples of other information that may be presented by a graphical user interface 304 in accordance with embodiments of the present invention includes communications session status and/or identification information 320, time and date information 324, and user 108 presence information 328. Still other examples include application and/or content menus 332, and contact information and/or calendar information 336.

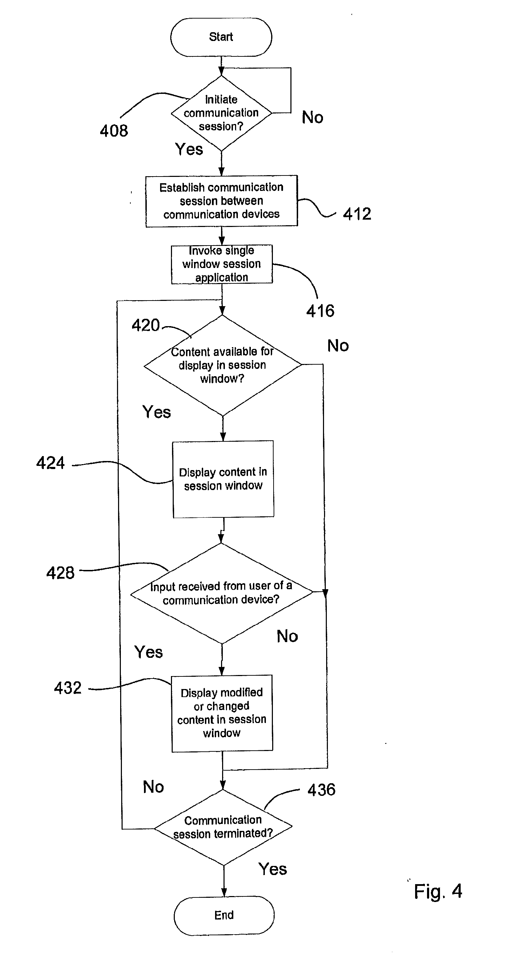

With reference now to **Fig. 4****,** aspects of the operation of a communications system 100 and in particular of a single window session application 220 included in the communications system 100 in accordance with embodiments of the present invention are illustrated. Initially, a determination is made as to whether a communications session is to be initiated (step 404). Once it is determined that a communications session is to be initiated, a communications session is established between participating communication devices 108 over a communication network 112 (step 412). As can be appreciated by one of skill in the art, a communications session between two or more communication devices 104 can be established in association with the operation of a server 116 comprising a communication server, or other network authority. As examples, the communications session can comprise voice telephony or video telephony communications. In addition, at step 416, a single window session application 220 is invoked by or on behalf of one or more of the communication devices 104 participating in the communications session. In accordance with embodiments of the present invention, a single window session application 220 can be executed locally by a communication device or devices 104. In accordance with still other embodiments, a single window session application 220 can be executed by a server computer 116 on behalf of a communication device 104, or a peer communication device 104 providing services to another communication device 104. Accordingly, a single window session application 220 can be provided from the "cloud", as software as a service, or any other software application made available to users on either a subscription basis, paid for according to use, or available for purchase. Accordingly, multiple instances of the single window session application 220 may be running on communication devices 104 and/or servers 116 participating in a communications session, or a single window session application 220 can perform services on behalf of multiple communication devices 104 participating in the communications session.

At step 420, a determination is made as to whether content 234 is available for display in the single window user interface 308 displayed through execution of the single window session application 220. If content 234 is available, that content is displayed in the single window user interface 308 presented by the displays of the communication devices 104 (step 424). Content 234 can be made available for display in response to the receipt of input from a user 108 selecting the content 234. Content 234 can also be made available through the execution scripts associated with the communications session.

At step 428, a determination is made as to whether input is received from a user 108 of a communication device 104 participating in the communications session. Input can comprise the manipulation of content 234 currently displayed by the single window user interface 308. Input can also include the selection of new (e.g., second) content 234 for display in the single window user interface 308. Moreover, the effect that a particular input entered by a user 108 has with respect to content 234 displayed by the single window user interface 308 at the time that input is received is determined by the application 232 with which the displayed content is associated. In response to receiving input from a user, modified or changed content 234 is displayed in the single window user interface 308 (step 432). In accordance with embodiments of the present invention, where input from a user 108 comprises a selection of new content 234, the new content 234 replaces the display of the previous content 234 in the display of the single window session application 308. That is, multiple windows containing content 234 are not generated by sequential selections of content 234. Instead, sequential selection of content results in replacement of previous content 234 with newly selected content 234 in the single window user interface 308. However, superseded or previously selected content 234 can be represented by a selectable content icon or other representation 312, to facilitate toggling between different items of content 234 for display by the single window user interface 308. Moreover, the different items of content 234 can be presented in association with different applications 232.

At step 436, a determination may be made as to whether the communications session has been terminated. If the communications session has not been terminated, the process may return to step 420. If the communications session has been termination, the process may end.

The following example is provided for purposes of illustrating the operation of a single window session application 220, and examples of content 234 that can be displayed in the single window user interface 308 generated in connection with execution of the single window session application 220, in accordance with embodiments of the present invention. For example, a communications session may be scheduled using a calendaring application, or may be established on an ad hoc basis. The communications session generally includes multiple communication devices 104 functioning as communication devices. Moreover, the communications session may be established over a communication network 112, and may comprise establishing a communication channel between participating communication devices 104 that supports voice or video telephony. A single window session application 220, in accordance with the present example, is executed by each communication device 104 participating in the communications session. Moreover, the single window session application 220 utilizes the communication channel established between the communication devices 104 to transfer data. This data can include voice data provided in real time by users 108 of the communication devices 104. In addition, the single window session application 220 displays a single window user interface 308 on the corresponding communication device 104.

Continuing the example, content displayed by the single window user interface 308 may initially comprise conference participant information 316 identifying the users 108 participating in the communications session. The presentation of such conference participant information 316 may be according to a predefined script executed by the single window session application 220 running on the communication device 104 associated with a user 108 leading the communications session. In response to input from the user 108 leading the communications session, content 234 comprising an agenda for the communications session may be selected. Selection of the content 234 comprising an agenda causes the agenda (e.g., in the form of an outline) to be displayed in the single window user interface 308 presented by each communication device 104 participating in the communications session. Next, one of the users 108 may select a second item of content 234. For example, through or in association with a single window session application 220, second content 234 comprising a presentation (e.g., Microsoft PowerPoint) file, can be selected. Selection of a particular file may comprise selecting a listed file from a menu or other listing, and dragging a representation of the selected file to the single window user interface 308. The user 108 selecting the second content 234, or another user, can then provide input to manipulate the displayed content 234. For example, where the content 234 is a presentation file, a user 108 can page through the slides of the presentation by entering suitable input. In accordance with embodiments of the present invention, suitable input includes input in the form utilized by the underlying application 232 according to which the content 234 being displayed by the single window user interface 308 on the participating communication devices 104 is formatted.

Continuing the present example, third content 234 can be selected for display through the single window user interface 308. For instance, a user 108 may select a spreadsheet file for display. This selection can be made from a listing of available content on the user's 108 communication device 104, for example through double clicking or dragging and dropping the content 234 into the single window session application 220. In addition, that user 108 or another user 108 can manipulate the displayed content 234. For instance, data within one or more cells of the spreadsheet can be manipulated. As can be appreciated by one of skill in the art, the input used to control a cell of a spreadsheet may comprise a series of keystrokes that perform a different function with respect to a presentation application. Accordingly, embodiments of the present invention allow input to be received from a user 108, and apply that input in a context that is defined by the application 232 according to which the content 234 being displayed in the single window user interface 308 is formatted.

In accordance with embodiments of the present invention, as different selections of content 234 displayed through the single window user interface 308 are made, content icons 312 representing that content may populate the display 304 presented by the communication devices 104. Previously selected content can conveniently be reselected through selection of the corresponding content icon 312. Invocation of an item of content, either newly selected or previously selected, in turn causes the appropriate application 232, as necessary, to appropriately present the content 234. Accordingly, as illustrated in this non-limiting example, embodiments of a single window session application 220 can facilitate communications between users 108 of communication devices 104 by providing a convenient means through which content 234 is displayed in a single window user interface 308, and that allows different content 234 to be displayed in sequence, while avoiding the creation of multiple windows presenting such content 234. Instead, the content is displayed sequentially in the single window user interface 308.

As can be appreciated by one of skill in the art from the disclosure presented herein, embodiments of the present invention provide a single window session application 220 to display content 234 to participants in a communications session through a single window user interface 308. The use of a single window user interface 308 avoids the problem of displays containing multiple windows. Accordingly, embodiments of the present invention have particular application, but are not limited to, use in connection with communication devices 104 with limited visual displays.

The foregoing discussion of the invention has been presented for purposes of illustration and description. Further, the description is not intended to limit the invention to the form disclosed herein. Consequently, variations and modifications commensurate with the above teachings, within the skill or knowledge of the relevant art, are within the scope of the present invention. The embodiments described hereinabove are further intended to explain the best mode presently known of practicing the invention and to enable others skilled in the art to utilize the invention in such or in other embodiments and with various modifications required by the particular application or use of the invention. It is intended that the appended claims be construed to include alternative embodiments to the extent permitted by the prior art.

## Claims

1. A method for presenting content, comprising:
establishing a communication session between a first communication device and a second communication device;
displaying a first window on a display of the first communication device;
receiving first input at the first communication device from a first user, wherein the first input includes a selection of first content for display within the first window;
in response to receiving the first input, displaying the first content in the first widow on the display of the first communication device and displaying the first content in a first window on a display of the second communication device.

2. The method of Claim 1, further comprising:
receiving second input from the first user, wherein the second input includes a selection of second content for display within the first window;
in response to receiving the second input from the first user, replacing the first content in the first window of the displays of the first and second communication devices with the second content, and wherein the second content is displayed in the first window.

3. The method of Claim 2, further comprising:
displaying on the display of the first device a first content icon corresponding to the first content;
receiving third input from the first user, wherein the third input includes a selection of the first content icon by the first user;
in response to the selection of the first content icon by the first user, replacing the second content in the first window of the displays of the first and second communication devices with the first content, and wherein the first content is displayed within the first window.

4. The method of Claim 3, wherein the first content is rendered by a first application, wherein the second content is rendered by a second application.

5. The method of Claim 4, wherein a input comprising a first selection results in the performs a first function with respect to the first content when the first content is displayed in the first window, wherein the first selection performs a second function with respect to the second content when the second content is displayed in the first window.

6. The method of Claim 1, further comprising:
displaying second content in the first window of the displays of the first and second communication devices, wherein displaying the second content includes replacing the first content in the first window of the displays of the first and second communication devices with the second content, and wherein the second content is displayed in the first window;
displaying third content in the first window of the displays of the first and second communication devices, wherein displaying the third content includes replacing the second content in the first window of the displays of the first and second communication devices with the third content, wherein the third content is displayed in the first window, and wherein the first content, the second content, and the third content are displayed in series.

7. The method of Claim 1, further comprising:
receiving second input at the first communication device from the first user, wherein the second input includes a modification of first content displayed within the first window on the display of the first and second communication devices;
receiving third input at the second communication device from the second user, wherein the third input includes a second modification of the first content displayed within the first window on the display of the first and second communication devices.

8. The method of Claim 1, further comprising:
receiving second input at the first communication device from the first user, wherein the second input includes an instruction to allow a second user to provide input at the second communication device to modify the first content displayed within the first window on the displays of the first and second communication devices;
receiving third input at the second communication device from the second user, wherein the third input includes a second modification of the first content displayed within the first window on the display of the first and second communication devices.

9. The method of Claim 1, further comprising:
receiving second input at the first communication device from the first user, wherein the second input includes an instruction to allow a second user to provide input at the second communication device to modify the first content displayed within the first window on the displays of the first and second communication devices;
receiving third input at the second communication device from the second user, wherein the third input includes an indication to replace the first content displayed within the first window on the display of the first and second communication devices with second content, wherein the second content is displayed within the first window on the display of the first and second communication devices.

10. The method of Claim 1, wherein the communication session includes the exchange of voice information between the first user and a second user associated with the second communication device.

11. A communication system, comprising:
a first communication device, including:
a user output, including a display;
a user input;
a communication network interface;
memory, wherein instructions for executing a single window session application are stored;
a processor, wherein the processor is operable to execute the single window session application, wherein first content is displayed in a first window on the display of the first communication device, wherein the first content comprises a subject of a communication session established in connection with the communication network interface, wherein in response to input received at the user input of the first communication device second content is displayed in the first window on the display of the first communication device, wherein the second content replaces the first content in the first window on the display of the first communication device, and wherein the second content comprises a subject of the communication session:
a second communication device, including:
a user output, including a display;
a user input;
a communication network interface;
memory;
a processor, wherein the second communication device is associated with the first communication session, wherein the first content is displayed in a first window on the display of the second communication device, wherein in response to the input received at the user input of the first communication device second content is displayed in the first window on the display of the first communication device, wherein the second content replaces the first content in the first window on the display of the second communication device

12. The communication system of Claim 11, further comprising:
a communication network, wherein the communication network interface of the first communication device is interconnected to the communication network, wherein the communication network interface of the second communication device is interconnected to the communication network, and wherein the first communication session is established over the communication network, wherein instructions for executing a first instance of the single window session application are stored in the memory on the first communication device, wherein instructions for executing a second instance of the single window session application are stored in the memory of the second communication device, wherein the processor of the second communication device is operable to execute the second instance of the single window session application.

13. The communication system of Claim 12, wherein second input received at the user input of one of the first and second communication devices modifies the second content, and wherein modified second content is displayed in the first window on the display of the first communication device and in the first window on the display of the second communication device.

14. The communication system of Claim 13, further comprising a third communication device, including:
a user output, wherein the user output does not include a display operable to display the first or second content in a first window;
a user input;
a communication network interface, wherein the communication network interface of the third communication device is interconnected to the communication network, wherein the third communication device is associated with the first communication session, wherein the first and second content are not displayed by the third communication device.

15. The communication system of Claim 11, wherein the first window is a single window user interface.
